# EUROPÄISCHE PATENTSCHRIFT

(11) **EP 3 870 483 B1**
(45) Veröffentlichungstag und Bekanntmachung des Hinweises auf die Patenterteilung: **24.04.2024**
(21) Anmeldenummer: 19813236.7
(22) Anmeldetag: 18.10.2019
(51) Int. Cl.: B60R 21/272

(54) **GASGENERATOR, GASSACKMODUL, FAHRZEUGSICHERHEITSSYSTEM UND VERFAHREN ZUM BETREIBEN EINES GASGENERATORS**
GAS GENERATOR, AIRBAG MODULE, VEHICLE SAFETY SYSTEM AND METHOD FOR OPERATING A GAS GENERATOR
GÉNÉRATEUR DE GAZ, MODULE DE COUSSIN GONFLABLE, SYSTÈME DE SÉCURITÉ DE VÉHICULE ET PROCÉDÉ POUR FAIRE FONCTIONNER UN GÉNÉRATEUR DE GAZ

(30) Priorität: 23.10.2018 DE 102018126277
(43) Veröffentlichungstag der Anmeldung: 01.09.2021
(73) Patentinhaber: ZF Airbag Germany GmbH, 84544 Aschau a. Inn (DE)
(72) Erfinder: BIERWIRTH, Sebastian, 83562 Rechtmehring (DE)
(74) Vertreter: ZF Patentabteilung - DIPS
(86) Internationale Anmeldenummer: PCT/EP2019/078360
(87) Internationale Veröffentlichungsnummer: WO 2020/083773

(56) Entgegenhaltungen:
- EP-A1- 2 957 468
- DE-A1- 2 551 920
- DE-A1-102016 123 312
- JP-A- 2009 179 101
- US-A- 5 564 743

## Beschreibung

Die Erfindung betrifft einen Gasgenerator für ein Fahrzeugsicherheitssystem. Ferner betrifft die Erfindung ein Gassackmodul mit einem erfindungsgemäßen Gasgenerator, ein Fahrzeugsicherheitssystem mit einem erfindungsgemäßen Gasgenerator und ein Verfahren zum Betreiben eines Gasgenerators.

Es ist bekannt, dass Gasgeneratoren Filter bzw. Filtereinheiten aufweisen. Derartige Filter dienen insbesondere zum Zurückhalten von Schlacke oder Treibstoffpartikeln, welche bei Aktivierung des Gasgenerators, insbesondere durch einen Abbrand eines Treibstoffs gebildet werden und in einem innerhalb des Gasgenerators ausbildbaren Gasstrom von Abbrandgas transportiert werden können. Bekannterweise sind derartige pyrotechnische Treibstoffe Treibstoffe, welche bei Aktivierung des Gasgenerators von einem Anzünder angezündet und danach abgebrannt werden, oft in Form von Schüttungen bzw. axialer Aneinanderreihungen einzelner Treibstoffkörper in Form eines Treibstoffbetts ausgebildet. Insbesondere rohrförmig langgestreckte Gasgeneratoren weisen ein in einer Brennkammer angeordnetes, relativ langes und dichtes Treibstoffbett auf, welches beginnend von einem anzünderseitigen Ende der Brennkammer hin zu einem dazu gegenüberliegenden Brennkammerende hin im Wesentlichen vollständig abgebrannt werden soll. Bekannte Filter bzw. Filtereinheiten sind dort oftmals am Brennkammerende bzw. am entsprechenden Ende eines solchen langgestreckten Treibstoffbetts, insbesondere an einer fest vorgegebenen Stelle, positioniert und weisen den Nachteil auf, dass sie die Schlacke bzw. Treibstoffpartikel des gesamten Treibsoffbetts filtern müssen, was sich auch dort an einer relativ geringen begrenzten Gesamtfilterleistung nachteilig bemerkbar machen kann. Zudem können derartige Konstruktionen einen hochvolumigen bzw. sehr schnellen Durchsatz von Gasstrom am Brennkammerende durch einen quasi längeren axialen Rückstau des Gasstroms ungewünscht stark begrenzen. Hierbei kann zusätzlich auch ein nachteilig hoher Innendruck bzw. maximaler Innendruckwert in der Brennkammer entstehen, der eine massivere Auslegung eines Gehäuses der Brennkammer bzw. des Gasgenerators nötig macht. Weiterhin nachteilig an der vorbeschriebenen bekannten Konstruktion ist, dass sich der Abbrand eines derartigen Treibstoffbetts, welches sich, beginnend von einem anzünderseitigen Ende, durchgehend über eine große axial Länge hin, bis zu einem bekannten endseitigen Filter erstreckt, nach seiner bestimmungsgemäßen Anzündung nicht wesentlich beeinflussen bzw. steuern lässt. Anders ausgedrückt, wenn ein derartiges langes durchgehendes Treibstoffbett einmal an einer anfangsseitigen Stirnseite angezündet ist, vollzieht sich dessen Abbrand mit einer vorherbestimmbaren durchgehenden Geschwindigkeit bzw. Verbrennungsrate hin bis zu dessen endseitigen Stirnseite, ohne, dass dabei etwaige gewünschte Veränderungen, wie beispielsweise eine Verzögerung des Abbrands bzw. der Abbrandgeschwindigkeit, möglich wären. Schließlich weisen derartig bekannte Gasgeneratoren noch den Nachteil auf, dass das sogenannte Temperaturband der Leistungskurve des Gasgenerators eine relativ hohe Spreizung aufweist. In anderen Worten, ein derartiger Gasgenerator weist eine relativ große Streuung bezüglich seiner Gaserzeugungsrate hinsichtlich seines bestimmungsgemäßen Temperatureinsatzbereichs auf.

Außerdem ist aus der Druckschrift JP 2009 179101 A auch ein Gasgenerator für ein Fahrzeugsicherheitssystem bekannt, der ein äußeres Gehäuse, eine Anzündereinheit mit einem Anzünder, eine der Anzündereinheit axial nachgelagerten Brennkammer mit Treibstoffkörpern aufweist, wobei innerhalb der Brennkammer zumindest eine Filtereinheit angeordnet ist, die die Brennkammer entlang einer Längsachse des Gasgenerators in einen ersten Brennkammerabschnitt mit einer ersten Anzahl von ersten Treibstoffkörpern und zumindest einen weiteren Brennkammerabschnitt mit einer weiteren Anzahl von weiteren Treibstoffkörpern aufteilt. Bei diesem Gasgenerator handelt es sich um einen sogenannten "rein" pyrotechnisch betreibbaren Gasgeneratortyp, bei dem die Brennkammer im Ruhezustand, also vor Aktivierung des Gasgenerators, nicht zusätzlich mit Druckgas befüllt ist, sondern Umgebungsdruck, bzw. den bei der Herstellung des Gasgenerators vorherrschenden Umgebungsdruck aufweist.

Nachteilig an einer derartigen Konstruktion ist, dass zum einen die Herstellung eines derartigen Gasgenerators unflexibel und kostenaufwändig ist, da dort die Filtereinheit mittels zweier radial umlaufend angebrachter Rollierungen in Form einer "Doppelkrimpung am Gehäuse angebracht ist. Zum anderen ist hier von Nachteil, dass bei dem Betrieb eines solchen Gasgenerators das Volumen des ersten Brennkammerabschnitts und des weiteren Brennkammerabschnitts jeweils gleichbleibend vorbestimmt festgelegt ist.

Zudem ist aus der gattungsgemäßen Druckschrift DE 10 2016 123 312 A1 ein Gasgenerator für ein Fahrzeugsicherheitssystem bekannt, mit einem äußeren Gehäuse, einer Anzündereinheit mit einem Anzünder, einer der Anzündereinheit axial nachgelagerten Brennkammer mit Treibstoffkörpern, wobei das Gehäuse als ein Druckgasbehälter ausgebildet ist und im Ruhezustand des Gasgenerators die Brennkammer mit Druckgas befüllt ist und das Gehäuse an dem axialen Ende, das sich gegenüber dem durch die Anzündereinheit verschlossen Endes des Gehäuses befindet, eine konisch nach radial innen zulaufende Kontur aufweist, welche in einer Ausströmöffnung endet, die vor einer Aktivierung des Gasgenerators, mittels eines zweiten Berstelements gasdicht verschlossen ist.

Nachteilig an einer derartigen Konstruktion ist, dass nach einer Aktivierung des Gasgenerators ein innerhalb des Gasgenerators erzeugtes Gas ungesteuert bzw. in einer zu heftigen Art und Weise den Gasgenerator verlässt und ein daran angeschlossenes Mittel, beispielsweise einen Luftsack, entsprechen unerwünscht zu heftig aufbläst bzw. mechanisch zu stark belastet.

Vor diesem Hintergrund ist es Aufgabe der vorliegenden Erfindung, einen Gasgenerator anzugeben, der zumindest den vorgenannten Nachteil überwindet.

Ferner ist es Aufgabe der Erfindung ein weiterentwickeltes Gassackmodul und Fahrzeugsicherheitssystem anzugeben. Zudem ist es Aufgabe der Erfindung ein weiterentwickeltes Verfahren zum Betreiben eines Gasgenerators anzugeben, welches zumindest den vorgenannten Nachteil überwindet.

Erfindungsgemäß wird diese Aufgabe im Hinblick auf den Gasgenerator durch den Gegenstand des Patentanspruches 1, im Hinblick auf das Gassackmodul durch den Gegenstand des Patentanspruches 9, im Hinblick auf das Fahrzeugsicherheitssystem durch den Gegenstand des Patentanspruches 10 und im Hinblick auf das Verfahren zum Betreiben eines Gasgenerators durch den Gegenstand des Patentanspruches 11 gelöst.

Zur Lösung der eingangs genannten Aufgaben sieht die Erfindung einen Gasgenerator vor für ein Fahrzeugsicherheitssystem, mit einem äußeren Gehäuse, einer Anzündereinheit mit einem Anzünder und einer der Anzündereinheit axial nachgelagerten Brennkammer mit Treibstoffkörpern, wobei das Gehäuse als ein Druckgasbehälter ausgebildet ist und im Ruhezustand des Gasgenerators die Brennkammer mit Druckgas befüllt ist und das Gehäuse an dem axialen Ende, das sich gegenüber dem durch die Anzündereinheit verschlossen Endes des Gehäuses befindet, eine Kontur aufweist, welche in einer Ausströmöffnung endet, die vor einer Aktivierung des Gasgenerators, mittels eines zweiten Berstelements gasdicht verschlossen ist. Innerhalb der Brennkammer ist zumindest eine Filtereinheit angeordnet, die die Brennkammer entlang einer Längsachse des Gasgenerators in einen ersten Brennkammerabschnitt mit einer ersten Anzahl von ersten Treibstoffkörpern und zumindest einen weiteren Brennkammerabschnitt mit einer weiteren Anzahl von weiteren Treibstoffkörpern aufteilt. Die zumindest eine Filtereinheit ist im Ruhezustand und/oder im Aktivierungszustand des Gasgenerators verschiebbar entlang der Längsachse des Gasgenerators zwischen einem durch die Anzahl der ersten Treibstoffkörper gebildeten ersten Treibstoffbett und einem durch die Anzahl der weiteren Treibstoffkörper gebildeten zweiten Treibstoffbett gelagert, wobei nach einer Aktivierung des Gasgenerators die zumindest eine Filtereinheit als ein Verzögerungsglied wirkt, derart, dass nach einer Entzündung einer ersten Anzahl der ersten Treibstoffkörper das zweite Berstelement derart schnell geöffnet wird, dass zum Zeitpunkt dessen Öffnung noch keine Abbrandpartikel der ersten Treibstoffkörper in das zweite Treibstoffbett gelangt sind.

Bei dem äußeren Gehäuse des Gasgenerators handelt es sich um einen Druckgasbehälter, welcher im Ruhezustand des Gasgenerators, wenn dieser also noch nicht bestimmungsgemäß aktiviert worden ist, ein vorgespanntes, unter Druck stehendes Gas bzw. Gasgemisch aufweist. Demnach ist der erfindungsgemäße Gasgenerator als Hybridgasgenerator ausgebildet, welcher beispielsweise ein Gas bzw. Gasgemisch aus der Gruppe Argon, Helium, Sauerstoff oder Stickstoff, beispielsweise bei einem Druck von 550 bar bei Raumtemperatur aufweist. Die Brennkammer befindet sich dabei innerhalb des Druckgasbehälters und ist von dem entsprechenden Druckgas durchsetzt bzw. umfasst dieses mit, wobei die Treibstoffkörper der Brennkammer dann ebenfalls von dem Druckgas umgeben sind.

Insbesondere kann es sich bei dem erfindungsgemäßen Gasgenerator um einen sogenannten Rohrgasgenerator handeln, dessen äußeres Gehäuse im Wesentlichen einem langgestreckten Rohr entspricht, dessen Längserstreckung ein Mehrfaches der Erstreckung in Radialrichtung haben kann. Dementsprechend kann auch die Brennkammer des erfindungsgemäßen Gasgenerators ausgebildet sein. Hierbei kann die Brennkammer des erfindungsgemäßen Gasgenerators eine verhältnismäßig große Längserstreckung haben, wobei insbesondere deren Länge ein Vielfaches deren Durchmessers bzw. deren Breitenerstreckung aufweisen kann. Die Längsachse des Gasgenerators erstreckt sich dabei entlang bzw. parallel zu der Längserstreckung des Gasgenerators

Aufgrund des erfindungsgemäßen ausgebildeten Gasgenerators wird die Brennkammer durch die zumindest eine Filtereinheit in mehrere Brennkammerabschnitte, nämlich mindestens in einen ersten und einen weiteren Brennkammerabschnitt, entlang der Längsachse des Gasgenerators aufgeteilt. Es werden also in der Brennkammer mehrere längsaxial, durch die zumindest eine Filtereinheit abgeteilte, hintereinander liegende Brennkammerabschnitte mit Treibstoffkörpern geschaffen, welche vorteilhaft bei einem Betrieb des Gasgenerators jede für sich und/oder auch zueinander in Wirkung gebracht werden können. So ist es beispielsweise möglich eine stufenartige Abbrandcharakteristik der Treibstoffkörper der verschiedenen Brennkammerabschnitte zeitlich hintereinander zu bewirken, wodurch auch vorteilhaft eine entsprechende stufenartige Leistungskurve (Gasliefermenge bzw. Gasmassenstrom bzw. Druckentwicklung pro Zeiteinheit) des Gasgenerators, insbesondere eine sogenannte "S-Slope Charakteristik", erreicht werden kann. Die zumindest eine Filtereinheit, welche sich zwischen einem ersten Brennkammerabschnitt und einem weiteren Brennkammerabschnitt befindet, wirkt quasi wie eine Anzündbremse bzw. Anzündverzögerung, indem Anzündgas durch einen Abbrand der ersten Treibstoffkörper, sowohl örtlich als auch zeitlich gesehen, nicht unmittelbar auf die weiteren Treibstoffkörper des weiteren Brennkammerabschnitts einwirken können, sondern durch das Filterelement abgebremst bzw. verzögert werden, um danach dementsprechend zeitverzögert für eine Anzündung der weiteren Treibstoffkörper zu wirken. Weiters vorteilhaft lässt sich durch das vorbeschriebene stufenartige Aktivieren bzw. zeitlich versetztes Abbrennen der ersten und weiteren Treibstoffkörper der entstehende Innendruck in der Brennkammer reduzieren, so dass störende hohe Druckmaxima vermieden werden können. Zudem können vorteilhaft Abbrandprodukte (Schlacke / Partikel) von Treibstoffkörpern einzelner Brennkammerabschnitte durch eigens dafür ausgelegte Filtereinheiten gefiltert bzw. gekühlt werden, womit eine optimalere Filterauslastung bzw. Effektivitätssteigerung der einzelnen Filtereinheit(en) erreicht wird. Schließlich kann mit dem erfindungsgemäßen Gasgenerator vorteilhaft die Streuung bezüglich seiner Gaserzeugungsrate bzw seiner Leistungskurve hinsichtlich seines bestimmungsgemäßen Temperatureinsatzbereichs reduziert werden.

Vorzugsweise ist bei dem erfindungsgemäßen Gasgenerator die zumindest eine Filtereinheit gasdurchlässig und/oder partikeldurchlässig ausgebildet, wobei zumindest einige der ersten Treibstoffkörper an einer anzünderseitigen Stirnseite der zumindest einen Filtereinheit und zumindest einige der weiteren Treibstoffkörper an einer der anzünderseitigen Stirnseite gegenüberliegenden Rückseite der zumindest einen Filtereinheit angeordnet sind. Vorteilhaft ist also die zumindest eine Filtereinheit damit derart ausgebildet, dass heiße Gase und/oder heiße Partikel, welche durch einen Abbrand der ersten Treibstoffkörper gebildet werden, durch die zumindest eine Filtereinheit hindurch strömen bzw. diese passieren können, um eine, insbesondere durch die Filtereinheit zeitverzögerte, Anzündung der weiteren Treibstoffkörper in Gang zu setzen. Hierbei können vorzugsweise die ersten und die weiteren Treibstoffkörper voneinander unterschiedliche Abbrandraten und/oder Dimensionen und/oder chemische Zusammensetzungen aufweisen. Damit können mehrere axial hintereinander positionierte Brennkammerabschnitte mit jeweiligen Treibstoffkörpern von unterschiedlichsten Eigenschaften geschaffen werden. Beispielsweise kann eine Abbrandrate bzw. Abbrandgeschwindigkeit und/oder Gasausbeute bzw. ein erzeugbarer Gas-Massenstrom der unterschiedlichen Treibstoffkörper dazu genutzt werden, um eine sehr spezifische Leistungscharakteristik des Gasgenerators mittels einer einzigen Brennkammer zu erzielen. Die Treibstoffkörper können als eine Schüttung einzelner Treibstoffkörper vorliegen, wobei sie z.B. als gepresste, insbesondere trocken gepresste, Treibstofftabletten, extrudierte Körper, auch in Form von gebrochenen Granulaten oder in Form eines monolithischen Formkörpers oder in Form von aneinandergereihten Scheiben bzw. Ringen ausgebildet sein können.

Innerhalb der Brennkammer können zumindest zwei, vorzugsweise drei, insbesondere vier oder mehr Filtereinheiten angeordnet sein, die die Brennkammer entlang der Längsachse des Gasgenerators in zumindest drei, vorzugsweise vier, insbesondere fünf oder mehr Brennkammerabschnitte mit einer jeweiligen Anzahl von jeweiligen Treibstoffkörpern aufteilen. Somit ist quasi ein mehrstufiger Gasgenerator, also ein Gasgenerator mit mehreren voneinander abgetrennten Treibstoffkörpern bzw. Pyrotechnik-Bereichen in einer einzigen Brennkammer darstellbar, ohne, dass diese Bereiche von massiven bzw. gasdichten Einbauteilen in mehrere einzelne, insbesondere voneinander separierte, Brennkammern getrennt werden müssen. Vorteilhaft lässt sich somit ein bereits oben beschriebener mehrstufiger Gasgenerator realisieren bzw. eine mehrstufige bzw. abgestufte Anzünd- und/oder Abbrandcharakteristik des Gasgenerators erreichen. Vorteilhaft kann hierdurch eine notwendige gesamte Filterleistung auf mehrere einfach eingebaute Filterelemente verteilt bzw. aufgeteilt werden. Damit wird eine insgesamt effektivere Filterauslastung bzw. Filterbelastung erreicht, da mehrere einzelne Filterelemente besser bzw. gleichmäßiger und schneller von heißen Partikeln bzw. heißen Abbrandgasen durchströmt werden und eine entsprechende effektivere gesamte Filter- bzw. Kühlwirkung erreicht wird, wodurch ein größerer axialer Rückstau von Gasen/Partikeln vermieden werden kann.

Insbesondere kann die zumindest eine Filtereinheit sich im Wesentlichen senkrecht zu der Längsachse des Gasgenerators und im Wesentlichen über die gesamte radiale Querschnittsfläche des Gehäuses des Gasgenerators erstrecken, insbesondere derart, dass zwei benachbarte Brennkammerabschnitte durch die zumindest eine Filtereinheit axial voneinander beabstandet sind. Vorteilhaft sind dadurch die verschiedenen Treibstoffkörper der verschiedenen Brennkammerabschnitte vollflächig voneinander abgetrennt, sodass auch keine nachteilige Beeinflussung von direkt aneinander angrenzenden unterschiedlichen Pyrotechniken bzw. Treibstoffkörpern entstehen kann. Insbesondere kann die zumindest eine Filtereinheit auch im Wesentlichen inkompressibel ausgebildet sein. Dies hat den Vorteil, dass die zumindest eine Filtereinheit als eine im Wesentliche starre Abgrenzung zwischen den unterschiedlichen Treibstoffkörpern wirkt, sodass sich diese bei einem fertigen Gasgenerator über dessen Lebenszeit nicht mehr nennenswert nachteilig verschieben bzw. verlagern können, sondern in entsprechender Position gehalten werden. Ein gegebenenfalls erforderlicher Volumenausgleich, der ein Setzverhalten der Treibstoffkörper über die Lebenszeit des Gasgenerators ausgleicht, kann durch ein von der Filtereinheit separates Bauelement, beispielsweise einen Federfüllkörper, realisiert werden.

Indem die zumindest eine Filtereinheit derart verschiebbar entlang der Längsachse des Gasgenerators gelagert ist, sind bei der Herstellung des Gasgenerators, insbesondere bezüglich einer Befüllung der Brennkammerabschnitte mit entsprechenden Treibstoffkörpern, schnell und kostengünstig verschiedene Varianten des Gasgenerators darstellbar. Die zumindest eine Filtereinheit muss nicht an einer speziell vorbestimmten Position verbaut, beispielsweise dort in ein Brennkammer- oder Gasgeneratorgehäuse eingepresst bzw. dort festgelegt werden. Vielmehr ist es durch den erfindungsgemäßen Aufbau des Gasgenerators möglich, eine oder mehrere Filtereinheiten lose bzw. quasi "schwimmend" zwischen Treibstoffkörpern bzw. Treibstoffbetten einzusetzen und somit auf verschiedene Befüllhöhen bzw. Befüllmengen an Treibstoffkörpern schnell und unkompliziert bei der Herstellung des Gasgenerators einzugehen. Zudem hat dieser Aufbau auch über die Lebenszeit des Gasgenerators den Vorteil, dass sich bei einem Setzverhalten der Treibstoffkörper und/oder Treibstoffbetten, beispielsweise durch Schüttel- bzw. Rüttelvorgänge an dem Gasgenerator, der oder die Filtereinheiten in Axialrichtung entsprechend mitbewegen können, sodass immer ein entsprechend kompaktes jeweiliges Treibstoffbett erhalten bleibt. Bevorzugt sind die ersten Treibstoffkörper des ersten Treibstoffbettes und die weiteren Treibstoffkörper des zweiten Treibstoffbettes als gepresste Tabletten, insbesondere in Form eines Zylinders, ausgebildet , wobei weiters bevorzugt die ersten Treibstoffkörper eine größere Geometrie, insbesondere einen größeren Durchmesser und/oder eine größere Höhe, als die weiteren Treibstoffkörper aufweisen.

Die zumindest eine Filtereinheit kann auch als eine Baugruppe ausgebildet sein, welche mehrere einzelne Filterelemente, insbesondere ein erstes Filterelement, ein zweites Filterelement und ein drittes Filterelement, umfasst, die vorzugsweise entlang der Längsachse des Gasgenerators aneinander angrenzen. Insbesondere kann die zumindest eine Filtereinheit Bereiche unterschiedlicher Dichte, beziehungsweise die mehreren einzelnen Filterelemente jeweils unterschiedliche Dichte und/oder Durchlassrate für Gase und Partikel aufweist/aufweisen, wobei vorzugsweise die mehreren einzelnen Filterelemente fest miteinander verbunden sind. Hierdurch kann eine Filtereinheit für sich individuell, insbesondere auch unterschiedlich zu anderen Filtereinheiten, gestaltet werden, insbesondere bezüglich ihres Filterverhaltens und/oder auch Verzögerungsverhaltens bezüglich Durchlässigkeit von Anzündgasen/-partikeln für axial nachfolgende anzuzündende Treibstoffkörper. Die Leistungscharakteristik des Gasgenerators lasst sich somit noch feinstufiger bzw. präziser einstellen.

Die zumindest eine Filtereinheit kann insbesondere eine der folgenden Anordnungen vom Filterelementen aufweisen:
a) Streckmetallblech, Drahtgewebe, Drahtgeflecht;
b) Streckmetallblech, Streckmetallblech, Drahtgeflecht;
c) Drahtgewebe, Drahtgewebe, Drahtgeflecht;
d) Lochblech, Streckmetallblech, Maschengestrick;
e) Lochblech, Drahtgewebe, Drahtgeflecht.

Das Gehäuse des Gasgenerators ist als ein Druckgasbehälter ausgebildet und im Ruhezustand des Gasgenerators ist die Brennkammer mit Druckgas befüllt und die zumindest eine Filtereinheit von Druckgas umgeben beziehungsweise durchdrungen, wobei der Druckgasbehälter von einem anzünderseitigen ersten Berstelement und einem diffusorseitigen zweiten Berstelement verschlossen ist. Bei einem derartigen sogenannten Hybridgasgenerator kann bereits bei einer Anzündung bzw. einem bestimmungsgemäßen Abbrand einer ersten Anzahl von ersten Treibstoffkörpern der Innendruck des gesamten Druckgasbehälters derart vorteilhaft schnell erhöht werden, dass der Druckgasbehälter wunschgemäß schnell geöffnet wird, um Abbrand- bzw. Aufblasgas in die Umgebung des Gasgenerators, insbesondere in einen daran angeschlossenen aufzublasenden Luftsack, schnell abgeben zu können. Insbesondere behindert bzw. verzögert dabei die zumindest eine Filtereinheit nicht die nötige Erhöhung des Innendrucks des Druckgasbehälters für dessen Öffnung. Zudem lässt sich bei der Herstellung eines solchen Hybridgasgenerators die durch die Filtereinheit getrennten mehrere Brennkammerabschnitte in einen einzigen Befüllvorgang mit Druckgas befüllen, da die Filtereinheit keine gasdichte Sperre darstellt.

Ein weiterer nebengeordneter Aspekt der Erfindung betrifft ein Gassackmodul mit einem von dem erfindungsgemäßen Gasgenerator aufblasbaren Gassack und einer Befestigungseinrichtung zur Anbringung des Gassackmoduls an einem Fahrzeug. Es ergeben sich ähnliche Vorteile, wie diese bereits im Zusammenhang mit dem erfindungsgemäßen Gasgenerator angegeben sind.

Ein weiterer nebengeordneter Aspekt der Erfindung betrifft ein Fahrzeugsicherheitssystem zum Schutz einer Person, beispielsweise eines Fahrzeuginsassen oder Passanten, mit einem von dem erfindungsgemäßen Gasgenerator aufblasbaren Gassack, als Teil eines Gassackmoduls, und einer elektronischen Steuereinheit, mittels der der erfindungsgemäße Gasgenerator bei Vorliegen einer Auslösesituation aktivierbar ist. Es ergeben sich ähnliche Vorteile, wie diese bereits im Zusammenhang mit dem erfindungsgemäßen Gasgenerator angegeben sind.

Ein weiterer nebengeordneter Aspekt der Erfindung betrifft ein Verfahren zum Betreiben eines Gasgenerators, insbesondere eines erfindungsgemäßen Gasgenerators. Das erfindungsgemäße Betriebsverfahren weist die folgenden Schritte auf:
a) Aktivieren einer Anzündereinheit zur Erzeugung von Anzündschwaden und eines Druckanstiegs innerhalb einer Anzündkammer;
b) Einleiten der Anzündschwaden in einen ersten Brennkammerabschnitt hin zu einer Anzahl von ersten Treibstoffkörpern, wobei ein die Anzündkammer verschließendes erstes Berstelement, welches ein Verschlusselement hin zu einem Druckgasbehälter darstellt, geöffnet wird;
c) Anzünden zumindest eines Teils der Anzahl von ersten Treibstoffkörpern und dadurch Erzeugen von Abbrandgas und/oder Abbrandpartikel;
d) Lenkung des Abbrandgases und/oder der Abbrandpartikel heraus aus dem ersten Brennkammerabschnitt, durch eine Filtereinheit hindurch, in einen weiteren Brennkammerabschnitt mit einer Anzahl von weiteren Treibstoffkörpern, insbesondere entlang einer Hauptströmungsrichtung, vorzugsweise entlang einer Längsachse des Gasgenerators wobei die Filtereinheit in axialer Richtung verschoben wird;
e) Anzünden zumindest eines Teils der Anzahl von weiteren Treibstoffkörpern und dadurch Erzeugen von weiterem Abbrandgas zeitlich verzögert zum Schritt c);
f) Öffnen eines gasgeneratorendseitigen zweiten Berstelements und Ausleiten des Abbrandgases des ersten und weiteren Brennkammerabschnitts, vorzugsweise über einen Diffusor, in die Umgebung des Gasgenerators, insbesondere in einen aufzublasenden Gassack.

Insbesondere kann bei dem Schritt e) vorteilhaft ein in Bezug auf das Anzünden zumindest eines Teils der Anzahl von ersten Treibstoffkörpern ein dazu zeitlich, insbesondere deutlich zeitlich, verzögertes Anzünden zumindest eines Teils der weiteren Treibstoffkörper erreicht werden, wodurch sich eine stufenartige zeitlich zueinander verzögerte Gaserzeugung durch die beiden Brennkammerabschnitte ergibt. Vorzugsweise lässt sich eine derartige stufenartige Gaserzeugung auch mehrfach innerhalb der Brennkammer wiederholen, indem eine Vielzahl von Brennkammerabschnitten, insbesondere mit unterschiedlichen bzw. verschiedenartigen Treibstoffkörpern befüllt, durch eine entsprechende Vielzahl von Filtereinheiten langsaxial voneinander getrennt, zeitlich nacheinander aktiviert bzw. die entsprechenden Treibstoffkörper zeitlich versetzt zueinander angezündet werden.

In Schritt f) kann es sich dabei bei dem gasgeneratorendseitigen zweiten Berstelement um eine Berstscheibe aus Metall, insbesondere Stahl, handeln, welche als Verschlusselement eines Druckgasgehälters eines Hybridgasgenerators ausgebildet ist, also dementsprechend hohen Drücken von beispielsweise 500 bar bei Raumtemperatur in der Ruhestellung des Hybridgasgenerators standhalten muss. Alternativ dazu kann es sich bei dem gasgeneratorendseitigen zweiten Berstelement um eine sogenannte Verdämmung, eine vergleichsweise dünnere Folie aus Metall, insbesondere aus Kupfer, Aluminium oder Stahl, handeln, welche bei einem rein pyrotechnischen Gasgenerator als Verschlusselement der Brennkammer dient und im Ruhezustand des Gasgenerators lediglich Atmosphärendruck ausgesetzt ist.

Die Erfindung wird im Folgenden anhand von Ausführungsbeispielen unter Bezugnahme auf die beigefügten, schematischen Figuren näher erläutert:

### Darin zeigen:

Fig. 1 eine Längsschnittansicht durch einen erfindungsgemäßen Gasgenerator mit einer ersten Ausführungsform einer Filtereinheit;
Fig. 2a - 2d eine vergrößerte Darstellung einer Filtereinheit des erfindungsgemäßen Gasgenerators gemäß Fig. 1 mit einzelnen Filterelementen;

Im Folgenden werden für gleiche und gleichwirkende Bauteile dieselben Bezugsziffern verwendet.

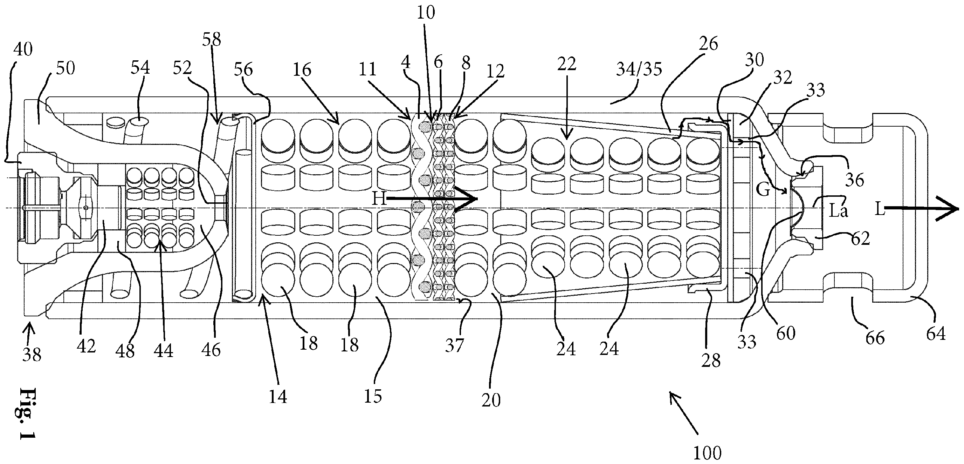

Fig. 1 zeigt einen Längsschnitt durch einen Gasgenerator 100 mit einer Längsachse La und mit einem äußeren Gehäuse 34, das rohrförmig bzw. im Wesentlichen zylinderförmig aufgebaut ist, wobei an einer Stirnseite des Gehäuses 34 eine Anzündereinheit 38 angebracht ist, um das Gehäuse 34 an seinem dortigen Ende zu verschließen. Der Anzündereinheit 38 axial nachgelagert ist eine Brennkammer 14, welche Treibstoffkörper 18, 24 umfasst, die als erste Treibstoffköper 18 und als weitere Treibstoffkörper 24 ausgebildet sind. Innerhalb der Brennkammer 14 ist eine Filtereinheit 10 angeordnet, die die Brennkammer 14 entlang der Längsachse La des Gasgenerators 100 in einen ersten Brennkammerabschnitt 15 mit einer Anzahl der ersten Treibstoffköpern 18, die ein erstes Treibstoffbett 16 ausbilden, und einen weiteren Brennkammerabschnitt 20 mit einer weiteren Anzahl der weiteren Treibstoffkörpern 24, die ein zweites Treibstoffbett 22 ausbilden, aufteilt. Die Filtereinheit 10, welche ein erstes Filterelement 4, ein zweites Filterelement 6 und ein drittes Filterelement 8 umfasst, ist dabei axial zwischen dem ersten Treibstoffbett 16 und dem zweiten Treibstoffbett 22 positioniert und kontaktiert dabei das erste Treibstoffbett 16 mit einer anzünderseitigen Stirnseite 11 und das zweite Treibstoffbett 22 mit einer dazu axial gegenüberliegenden Rückseite 12. Dabei sind die einzelnen Filterelemente 4, 6, 8 als im Wesentlichen scheibenförmige Elemente ausgebildet, die im Wesentlichen senkrecht zur Längsachse La des Gasgenerators 100 ausgerichtet sind und die insbesondere bezüglich ihres Filterverhaltens und/oder Durchlässigkeitsverhaltens von Anzündgasen/-partikeln unterschiedlich ausgeprägt sind.

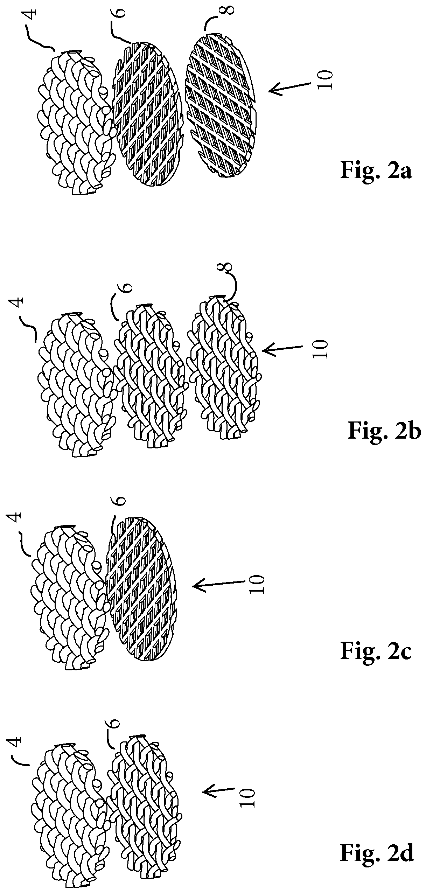

Die Filtereinheit 10, wie sie in Fig. 1 dargestellt ist, umfasst also drei einzelne Filterelemente 4, 6, 8, welche bei der Herstellung des Gasgenerators 100 entweder als jeweils lose Einzelbauteile axial hintereinander eingebaut werden, oder als vormontierte Baugruppe, indem sie aneinander befestigt, insbesondere verschweißt oder verpresst, sind, eingesetzt werden. Die Filtereinheit 10 kann dabei mit einem radial umlaufenden geringen Abstand zu einer Innenseite 37 des Gehäuses 34 des Gasgenerators 100, also mit einem gewissen Spiel eingelegt bzw. eingesetzt werden, oder auch mit einem geringen Übermaß in das Gehäuse 34 entsprechend eingepresst werden, derart, dass sie trotzdem noch längsaxial bewegbar gelagert ist. In beiden Montagefällen ist bzw. bleibt die Filtereinheit 10 also in axialer Richtung, insbesondere in Längsrichtung L des Gasgenerators 100, aber auch in entgegengesetzter Richtung dazu, verschiebbar positioniert. Die einzelnen Filterelemente 4, 6, 8 können dabei unterschiedlich zueinander gestaltet sein, wie in Fig. 2a-2d dargestellt und weiter unten dementsprechend detailliert beschrieben. Insbesondere kann hierbei durch jedes einzelne Filterelement 4, 6, 8 eine eigene spezifische Gas- und/oder Partikeldurchlässigkeit vorgegeben sein, wobei der in Figur 1 dargestellte Gasgenerator 100 nicht auf die Anzahl von drei einzelne Filterelementen 4, 6, 8 begrenzt ist. Vielmehr ist es möglich auch nur ein einziges, zwei oder eine Anzahl von mehr als drei einzelnen axial hintereinander angeordneten Filterelementen vorzusehen, welche dann die Filtereinheit 10 ausbilden.

Die Anzündereinheit 38 weist einen Anzünder 42 auf, welcher in einen Anzünderträger 40 verbaut und von diesem gehaltert bzw. fixiert ist. Die Anzündereinheit 38 hat zudem eine Verschlusskappe 50, die an ihrem Bodenbereich von einem ersten Berstelement 52 druckdicht verschlossen ist und die an ihrer dazu axial gegenüberliegenden Öffnung von dem Anzünderträger 40, vorzugsweise mittels einer Schweißverbindung, verschlossen ist. Zudem umschließt bzw. umfasst die Anzündereinheit 38 eine Boosterladung 44, welche in einer Anzündkammer 46 aufgenommen ist, und einen ersten Füllkörper 48, der axial an die Boosterladung 44 in Richtung Anzündträger 40 angrenzt und als kompressibles Element, z.B. aus Silikonschaum, ausgebildet ist, um die Boosterladung 44 in ihrer Lage zu fixieren bzw. um bei der Herstellung des Gasgenerators als entsprechendes Volumenausgleichsmittel für die Boosterladung 44 zu wirken.

Der Anzündträger 40 und die Verschlusskappe 50 sind vorzugsweise aus Metall, insbesondere aus Stahl, ausgebildet und miteinander insbesondere durch eine Schweißverbindung verbunden. Die Verschlusskappe 50 ist ihrerseits mit dem äußeren Gehäuse 34 insbesondere durch eine Schweißverbindung fest verbunden. Bei vorgenannten Schweißverbindungen kann es sich insbesondere um eine Reib- oder Widerstands- oder Laserschweißung handeln.

Ein Federfüllkörper 58 ist als Volumenausgleichsmittel und/oder Vorspannvorrichtung für die ersten Treibstoffkörper 18 und die zweiten Treibstoffkörper 24 im Inneren des Gasgenerators 100 vorgesehen. Dabei weist der Federfüllkörper 58 eine Feder 54, die insbesondere als Schraubenfeder ausgebildet ist, und ein Gasdurchlasselement 56 auf, welches als axiales im Wesentlichen planares Abschlusselement an einer Stirnseite der Feder 54, insbesondere angeschweißt oder durch Form- und/oder Kraftschluss, befestigt ist. Das Gasdurchlasselement 56 ist beispielsweise als scheibenförmiges Lochblech oder Streckmetall ausgeführt und grenzt an einen Teil der ersten Treibstoffkörper 18 an. Ein großer axialer Anteil der Feder 54 umfasst bzw. umschließt einen entsprechend großen axialen Bereich der Verschlusskappe 50 in radialer Richtung und drückt mittels einer Federspannung der Feder 54 in axialer Richtung hin zu den ersten Treibstoffkörpern 18, wobei das erste und das zweite Treibstoffbett 16, 22 und damit auch die dazwischen liegende Filtereinheit 10 in axialer Richtung fixiert und mechanisch vorgespannt werden.

Das zweite Treibstoffbett 22 ist entlang einem Großteil seiner axialen Erstreckung von einem Treibstoffkäfig 26 umgeben. Dabei ist der Treibstoffkäfig 26 als gasdurchlässiger konisch zulaufender Hohlkörper, beispielsweise aus Lochblech oder Streckmetall, ausgebildet und derart ausgerichtet verbaut, dass sein breiteres offenes Ende hin zu der Filtereinheit 10 weist. Das gegenüberliegende schmälere offene Ende des Treibstoffkäfigs 26 ist von einem Brennkammerboden 28 verschließend abgedeckt, der hier als eine Art Deckel bzw. Verschluss für den Treibstoffkäfig zu betrachten ist und als topfförmiges gasundurchlässiges Metallteil ausgebildet ist. Der Treibstoffkäfig 26 in Zusammenbau mit dem Brennkammerboden 28 weist hier unter anderem auch die Funktion eines Behälters für die weiteren Treibstoffkörper 24 auf bzw. kann bei der Herstellung des Gasgenerators 100 als eine Art Fülltrichter bzw. Füllbehältnis für die Treibstoffkörper 24 benutzt werden. Ein Endfilter 30 der als ein im Wesentliches scheibenförmig Bauteil ausgebildet ist, schließt sich dem Brennkammerboden 28 axial nachgelagert an und ist vorzugsweise aus Metall ausgebildet, insbesondere als Maschengestrick, Maschengeflecht, Lochblech oder Streckmetall und bildet einen zu der Filtereinheit 10 zusätzlichen Filter, der äußerst dünn bzw. in seiner axialen Erstreckung platzsparend ausgebildet ist und vorzugsweise als Endfilter für Partikel wirkt.

Eine Endscheibe 32 aus Metall mit mehreren Durchgangsöffnungen 33 ist dem Endfilter 30 axial nachgelagert, im Wesentlichen als flache Scheibe ausgebildet, und liegt an einem Abschnitt des Gehäuses 34 des Gasgenerators 100 an, der von einem zylindrischen in einen konischen Bereich übergeht. Die Endscheibe 32 kann in diesem Abschnitt an dem Gehäuse 34 lediglich aufliegen bzw. anliegen, oder kann zur besseren Fixierung dort auch eingepresst sein. Vorteilhaft ist dabei die Kontur der Stirnseite der Endscheibe 32, welche dem Endfilter 30 abgewandt ist, der Kontur des Gehäuses 34 im Abschnitt des vorgenannten Übergangs von dem zylindrischen in den konischen Bereich angepasst. Die Endscheibe 32 kann auch als Abschluss bzw. abschließendes Element der Brennkammer 14 in axialer Richtung betrachtet werden.

Wie zuvor schon angedeutet, weist das Gehäuse 34 des Gasgenerators 100 an dem axialen Ende, das sich gegenüber dem durch die Anzündereinheit 38 verschlossen Endes des Gehäuses 34 befindet, eine konisch nach radial innen zulaufende Kontur auf, welche in einer Ausströmöffnung 36 endet, die auch als gesamte Ausströmöffnung für Abbrandgas bzw. auszuströmendes Gas betrachtet werden kann. Die Ausströmöffnung 36 ist im Ruhezustand, also vor einer Auslösung bzw. Aktivierung des Gasgenerators 100, gasdicht verschlossen durch eine Verschlusseinheit, die aus einem Verschlussstück 62 und einer daran fest angebundenen, insbesondere angeschweißten, zweiten Berstelement 60 gebildet ist. Das Verschlussstück 62 ist dabei fest mit dem Gehäuse 34 verbunden, insbesondere verschweißt, sodass dort die Ausströmöffnung 36 des Gehäuses 34 durch die Verschlusseinheit, gebildet aus Verschlussstück 62 und Berstelement 60, verschlossen ist.

Im dargestellten Fall der Figur 1 ist das Gehäuse 34 des Gasgenerators 100 als ein Druckgasbehälter 35 ausgebildet, welcher im Ruhezustand des Gasgenerators 100 ein vorgespanntes Druckgas bzw. Gasgemisch beispielsweise aus der Gruppe Argon, Helium, Sauerstoff oder Stickstoff, insbesondere unter einem Druck von 550 bar bei Raumtemperatur einschließt. Ein derart vorgespeichertes Druckgas wird auch als Kaltgas bezeichnet. Somit zeigt das Design des erfindungsgemäßen Gasgenerators 100 in der Figur 1 einen sogenannten Hybridgasgenerator. Die jeweilig axial gegenüberliegenden gasdichten Verschlüsse für dem Druckgasbbehälter 35 stellen zum einen die Anzündereinheit 38 und zum anderen die Verschlusseinheit umfassend das Verschlussstück 62 mit dem aufgeschweißten zweiten Berstelement 60 dar. Innerhalb dieser beiden gasdichten Verschlüsse befindet sich also das Druckgas, welches sich insbesondere somit auch zwischen den Treibstoffkörpern 18, 24 und den Filterelementen 4, 6, 8 der Filtereinheit 10 befindet bzw. diese Bauteile entsprechend umgibt.

Axial nachgeordnet an das axiale Ende des Gehäuses 34 des Gasgenerators 100, welches das Verschlussstück 62 aufweist, ist an das Gehäuse 34 von außen her ein Diffusor 64 mit Auslassöffnungen 66 fest angebunden, wobei der Diffusor 64 an das Gehäuse 64 angeschweißt sein kann, insbesondere durch Laserschweißen, Reibschweißen oder Widerstandsschweißen, oder durch eine kraft- und/oder formschlüssige Anbindung, wie beispielsweise einer Krimp- oder Rollierverbindung, dort festgelegt sein kann. Der Diffusor 64 kann auch als quasi weiterführendes Außengehäuse des Gasgenerators 100 aufgefasst werden und ermöglicht durch seine Auslassöffnungen 66, die auch nur als eine einzige Auslassöffnung 66 ausgebildet sein kann, eine Gasabströmung bzw. Gasausleitung aus dem Gasgenerator 100 in dessen Umgebung, insbesondere in einen (nicht dargestellten) an den Gasgenerator 100 angeschlossenen aufzublasenden Luftsack.

Die Funktionsweise des erfindungsgemäßen Gasgenerators 100 wird Anhand der Fig. 1 wie folgt beschrieben. Bei Vorliegen eines Aktivierungssignals, welches den Gasgenerator aus einer Ruhestellung in einen Aktivierungszustand bzw. Auslösezustand bringt, wird zunächst der Anzünder 42, als vorzugsweise vorgefertigte Baueinheit die eine oder mehrere pyrotechnischer Ladungen (nicht dargestellt) umfassen kann, aktiviert, indem im Inneren des Anzünders 42 ein entsprechend hoher Druck ausbildet wird, der einen Teil der Außenhülle des Anzünders 42 öffnet bzw. aufreißt und heiße Anzündgase bzw. Anzündpartikel freisetzt, welche die Boosterladung 44 anzünden und deren Abbrand bewirken. Innerhalb der Anzündkammer 46 bildet sich sodann ein Innendruck auf, der bei Überschreiten eines entsprechenden Grenzwertes das erste Berstelement 52 öffnet bzw. aufreißt, um heiße Anzündgase bzw. Anzündpartikel in die Brennkammer 14, insbesondere auf bzw. an die axial nächstliegenden ersten Treibstoffkörper 18 hinzuleiten. Hierbei ist es auch denkbar, dass die Boosterladung 44 nicht, wie in Fig. 1 dargestellt, separat zu dem Anzünder 42 ausgebildet ist, sondern bereits in diesen integriert ist, wodurch sich ein gegebenenfalls entsprechend axial länger bauender Anzünder 42 ergeben kann, als er in Fig. 1 abgebildet ist. Sodann wird eine erste Anzahl von ersten Treibstoffkörpern 18 entzündet bzw. abgebrannt und eine entsprechende Ausbildung von Gas bzw. Abbrandgas findet statt. Dieses gebildete Gas strömt in Richtung der in Fig. 1 skizzierten Hauptströmungsrichtung H, welche im Wesentlichen parallel zu der Längsachse La des Gasgenerators 100 ausgerichtet ist.

Durch das gebildete (heiße) Gas wird der Innendruck in der Brennkammer relativ schnell erhöht, sodass zusätzlich zu dem bereits im Ruhezustand des Gasgenerators in der Brennkammer vorherrschende Druck des dort vorgespeicherten Druckgases ein weiter Druck bzw. ein Überdruck ausgebildet wird, derart, dass bei Überschreitung eines entsprechenden Druck-Schwellenwertes das zweite Berstelement 60 geöffnet werden kann. Vorzugsweise wird dabei zunächst nur ein gewisser Anteil des in dem Druckbehälter 35 vorab gespeicherte Druckgases, also ein Teil Kaltgas, in den Diffusor 64 abgegeben, um dann weiter in einen aufblasbaren Gassack bzw. Gassackmodul (nicht dargestellt) geleitet zu werden, wobei sich vorteilhaft eine geringe mechanische Anfangsbelastung für den Gassack bzw. das Gassackmodul ergibt, da hierdurch eine quasi "sanfte" Anfangsentfaltung des Gassacks bzw. "sanfte" Öffnung des Gassackmoduls ermöglicht wird.

Erst nachdem eine gewisse Menge an Kaltgas aus dem Gehäuse 34 durch die Auslassöffnung 66 ausgeströmt ist, kann heißes Gas, das aus Abbrand der Treibstoffkörper gebildet ist quasi nachströmen und ebenfalls das Gehäuse 34 und den Diffusor 64 verlassen, um den Gassack bestimmungsgemäß vollends zu füllen. Eine derartige Ausströmcharakteristik von Gas aus dem Gasgenerator bzw. eine derartige Druck-Leistungskurve, die sich daraus ergibt, dass zunächst nur eine gewisse geringe Gasmenge aus dem Gasgenerator freigesetzt wird und zeitlich versetzt danach eine größere Gasmenge quasi nachströmt, ist auch unter dem Begriff "S-Slope" bekannt, wie weiter oben bereits erwähnt, und gilt im Allgemeinen als sehr vorteilhaft für einen derartigen Gasgenerator und wird durch den erfindungsgemäßen Gasgenerator besonders vorteilhaft erreicht, wie weiter unten noch beschrieben.

Vorteilhaft kann dadurch ein aufzublasender Gassack bzw. ein diesen umfassendes Gassackmodul anfangs sanft bzw. materialschonend mit Gas gefüllt werden, um nach einer gewissen Zeit dann die Restmenge an Aufblasgas einströmen zu lassen, die den Gassack bzw. das Gassackmodul bestimmungsgemäß vollends füllt.

Nachdem also eine erste Anzahl von ersten Treibstoffkörpern 18 entzündet bzw. abgebrannt worden ist kann das zweite Berstelement 60 vorteilhaft sehr schnell geöffnet werden, durch eine entsprechende Drucküberhöhung in dem Druckgasbehälter 35, wobei anfangs nur ein Teil Kaltgas aus der Ausströmöffnung 36 freigegeben wird. In diesem Fall wirken zunächst keine ersten heißen Abbrandpartikel aus dem Abbrand der ersten Anzahl von ersten Treibstoffkörpern 18 auf die weiteren Treibstoffkörper 24 ein. Vielmehr wirkt hier das Filterelement 10 als eine Art temporäre Sperre bzw. eine Art Verzögerungsglied für diese ersten heißen Abbrandpartikel, da diese zunächst in dem ersten Brennkammerabschnitt 15 generiert werden und erst das Filterelement 10 passieren müssen, um in den weiteren Brennkammerabschnitt 20 gelangen zu können, um dort die zweiten Treibstoffkörper 24 anzuzünden. Erst nach einer gewissen Zeit, nachdem heiße Abbrandpartikel, welche durch Abbrand der ersten Treibstoffkörper 18 erzeugt worden sind, das Filterelement 10 passiert haben und in den weiteren Brennkammerabschnitt 20 eingetreten sind, können dort die weiteren Treibstoffkörper 24 angezündet und abgebrannt werden, um weiteres heißes Gas bzw. Abbrandgas zu erzeugen. So sind also zum Zeitpunkt der Öffnung des zweiten Berstelements 60 noch keine heißen Abbrandpartikel in das zweite Treibstoffbett 22 gelangt. Es tritt anfangs nur eine erste, geringe Menge an Kaltgas aus dem Gasgenerator 100 aus.

Wie in Fig. 1 skizziert, strömen erzeugtes Gas und Abbrandpartikel, sowohl von den ersten Treibstoffkörpern 18, als auch von den weiteren Treibstoffkörpern 24 im Wesentlichen in einer axialen Richtung entlang, wie mittels des Pfeilsymbols, das die Hauptströmungsrichtung H darstellt, angedeutet ist.

Um schließlich durch die endseitige Ausströmöffnung 36 des Gasgenerators 100 zu gelangen, strömt das erzeugte Gas, bzw. Aufblasgas für einen Gassack, weiter entlang einer Gasströmung G, deren Strömungsweg symbolisch mittels einer Linie, mit mehreren Pfeilsymbolen durchsetzt, in Fig. 1 eingetragen ist. Demnach strömt das Gas bzw. Aufblasgas aus dem inneren Bereich des Treibstoffkäfigs 26 durch dessen konische, gasdurchlässige Seitenwände in Richtung des Endfilters 30. Hierbei ist es natürlich möglich, dass das Gas über die gesamte Längserstreckung des Treibstoffkäfigs 26 aus dessen Innenbereich, wo ein Großteil der weiteren Treibstoffkörper 24 lagert, durch die gasdurchlässige Seitenwände des Treibstoffkäfigs 26 hindurch, zu dessen Außenbereich strömt, um in dem durch den Treibstoffkäfig 26 und die Innenseite 37 des Gehäuses 34 des Gasgenerators 100 gebildeten Raum in Richtung Endfilter 30 zu strömen.

Danach kann das erzeugte Gas dann durch den Endfilter 30 hindurch strömen, wodurch eine weitere Kühlung bzw. Filterung des Gases vorgenommen wird, um danach durch die Durchgangsöffnungen 33 hindurch und weiter durch die Ausströmöffnung 36 in den Innenraum des Diffusor 64 strömen zu können, da bereits die zweite Berstmembrane 60 durch Überdruck geöffnet worden ist, wie weiter oben beschrieben. Das erzeugte Gas kann sich nun in dem Innenraum des Diffusors 64 mit dem Kaltgas bzw. einer Restmenge des Kaltgases, welche zu diesem Zeitpunkt noch im Druckgasbehälter 35 vorhanden ist und die im Wesentlichen zeitgleich mit dem erzeugten Gas ebenfalls durch die Ausströmöffnung 36 in den Innenraum des Diffusors 64 strömt, vermischen und danach den Diffusor 64 durch dessen Auslassöffnungen 66 in den Außenbereich des Gasgenerators 100, hin bzw. in eine aufblasbaren Gassack (nicht dargestellt) strömen. Der Diffusor 64 dient hierbei demnach auch als Mischkammer für erzeugtes Gas und vorgespeichertes Druckgas (Kaltgas).

Generell können die ersten Treibstoffkörper 16 im Vergleich zu den weiteren Treibstoffkörpern 24 eine unterschiedliche Abbrandcharakteristik aufweisen, indem beispielsweise jeweils unterschiedliche Geometrien, Abmessungen, Abbrandraten und/oder chemische Zusammensetzungen für die Treibstoffkörper 18, 24 verwendet werden.

Generell sind auch mehr als nur zwei Treibstoffbette 16, 22 denkbar, welche mit einer gegenseitigen Abtrennung durch entsprechend mehrere Filtereinheiten 10, nach dem prinzipiellen Aufbau wie er in Fig. 1 dargestellt ist, axial hintereinander in den Gasgenerator 100 eingebaut sind. Insbesondere sind hier zwei oder drei Filterelemente 10 denkbar, welche entsprechend drei bzw. vier Treibstoffbette voneinander beabstanden bzw. voneinander trennen.

Festzuhalten für alle vorbeschriebenen Ausführungsformen des erfindungsgemäßen Gasgenerators 100 ist, dass durch die Art und Weise des Einbaus bzw. die Lage/Position der Filtereinheit 10 in dem Gasgenerator 100 entscheidende Vorteile erreicht werden können.

Die Filtereinheit 10 ist verschiebbar, insbesondere entlang der Längsachse La des Gasgenerators 100, vorteilhaft in beide Richtungen verschiebbar, quasi als loses, sozusagen "schwimmendes" Bauteil zwischen den zwei Treibstoffbetten 16, 22 gelagert. Dies hat sowohl bei der Herstellung des Gasgenerators 100, als auch bei der bestimmungsgemäßen Funktion (Aktivierung) des Gasgenerators 100 die eingangs genannten Vorteile.

Bei der Herstellung des erfindungsgemäßen Gasgenerators 100 kann demnach äußerst flexibel und kostengünstig auf unterschiedliche Befüllungen, Befüllmengen und/oder Befülltoleranzen von unterschiedlichen Treibstoffkörpern 18, 24 eingegangen werden. Insbesondere werden hier durch die Filtereinheit 10 eine Anzahl von mehreren Treibstoffbetten axial hintereinander gelagert aufgebaut, ohne, dass auf einer fest vorbestimmten Position eine Abtrennung zwischen den mehreren Treibstoffbetten angebracht werden muss. Bei der Funktion eines derartigen Gasgenerators bzw. bei den Abbränden der mehreren Treibstoffbetten ist die Filtereinheit 10 verschiebbar zwischen den Treibstoffbetten gelagert und passt sich sozusagen den dynamischen Abbrandprozessen der verschiedenen Treibstoffbetten "automatisch bzw. selbsteinstellend" an. Gemeint ist damit insbesondere, dass sich generell bei einem Abbrand (einer Umsetzung) eines Treibstoffbettes, welches mehrere Treibstoffkörper umfasst, mit fortschreitender Zeit ein entsprechendes reduziertes Gesamtvolumen des Treibstoffbettes ergibt - quasi eine Volumenverringerung durch abgebrannte Treibstoffkörper, welche zu erzeugtem Gas umgesetzt wurden. Während eines derartigen dynamischen Abbrandprozesses wird die Filtereinheit 10 also entsprechend in axialer Richtung mit verschoben, um sozusagen auf den Volumenschwund der abgebrannten Treibstoffbetten "automatisch zu reagieren".

In Figur 2a bis 2d werden verschiedene Ausführungsform bzw. Aufbauten von unterschiedlichen Filtereinheiten 10 dargestellt. Dabei sind die jeweiligen Filtereinheiten 10 aus mehreren scheibenförmigen Lagen aufgebaut, welche als einzelne Filterelemente 4, 6 und 8 bezüglich Fig 2a-b und 4 und 6 bezüglich Fig. 2c-d axial hintereinander aufgereiht bzw. positioniert sind. Für jede der hier dargestellten Filtereinheiten 10 gilt, dass sie ein erstes Filterelement 4 aufweist, welches im eingebauten Zustand der Filtereinheit 10 in den Gasgenerator 100 jeweils in Richtung der Anzündereinheit 38 gerichtet ist und somit dasjenige Filterelement darstellt, welches mit einer seiner anzünderseitigen Stirnseite 11 an einen Teil der ersten Treibstoffkörper 18 angrenzt.

Vorzugsweise ist das jeweils erste Filterelement 4 als Drahtgewebe aufgebaut. Zudem stellt das jeweils erste Filterelement 4 vorzugsweise dasjenige Filterelement dar, welches im Vergleich zu den restlichen Filterelementen der Filtereinheit 10 den massivsten Aufbau hat und somit auch eine Art ersten Grobfilter darstellt, der insbesondere sehr robust für bzw. gegen heiße Partikel und Abbrandgase ausgelegt ist. Dies ist durch eine dargestellte höhere Materialdicke für die einzelnen Drähte, welche das Drahtgewebe der dargestellten Filterelemente 4 ausbilden, in den Figuren 2a - 2d angedeutet.

Konkret ist die Filtereinheit 10, wie sie in Fig.2a dargestellt ist, aus einem massiven ersten Filterelement 4, insbesondere einem Drahtgewebe oder Drahtgeflecht, gefolgt von einem zweiten Filterelement 6 und einem dritten Filterelement 8, welche beide vorzugsweise ein Streckmetallblech aufweisen, ausgebildet.

Die Filtereinheit 10, die in Fig.2b dargestellt ist, weist neben einem massiven ersten Filterelement 4, insbesondere einem Drahtgewebe oder Drahtgeflecht, zwei weitere Filterelemente, nämlich ein zweites und drittes Filterelement 6 und 8, auf, welche beide vorzugsweise als ein Drahtgeflecht mit geringerer Materialstärke als das erste Filterelement 4 ausgebildet sind.

Die Filtereinheit 10, die in Fig.2c dargestellt ist, weist neben einem massiven ersten Filterelement 4, insbesondere einem Drahtgewebe oder Drahtgeflecht, lediglich ein weiteres Filterelement, nämlich ein zweites Filterelement 6 auf, welches vorzugsweise als ein Streckmetallblech ausgebildet ist.

Die Filtereinheit 10, die in Fig.2d dargestellt ist, weist neben einem massiven ersten Filterelement 4, insbesondere einem Drahtgewebe oder Drahtgeflecht, ebenfalls nur ein weiteres Filterelement, nämlich ein zweites Filterelement 6 auf, welches hier vorzugsweise ein Drahtgeflecht mit geringerer Materialstärke als das erste Filterelement 4 aufweist.

Als Filtereinheit 10 kommen für den erfindungsgemäßen Gasgenerator 100 auch Filtereinheiten mit nur einem einzigen ersten Filterelement 4, oder auch Filtereinheiten, die eine größere Anzahl als drei Filterelemente aufweisen infrage. Vorteilhaft sind dabei im Falle mehrere Filterelemente diese bereits zu einer vormontierten Baugruppe, der Filtereinheit 10, zusammengefasst, insbesondere miteinander verschweißt, oder form- und/oder kraftschlüssig miteinander verbunden, bevor sie in den Gasgenerator montiert werden.

Die in Figuren 2a-2d dargestellten Filtereinheiten 10 sind lediglich als eine mögliche Auswahl an Filtereinheiten für den erfindungsgemäßen Gasgenerator 100 zu verstehen. Somit kann eine Filtereinheit 10 für den erfindungsgemäßen Gasgenerator 100 eine Vielzahl von einzelnen Filterelementen, die alle unterschiedlich zueinander oder nur zum Teil unterschiedlich zueinander ausgebildet sind, aufgebaut sein. Dabei ist jegliche Kombination von einzelnen Filterelementen, die beispielsweise aus einem Streckmetallblech, einem Drahtgeflecht, einem Lochblech oder Maschengestrick ausgebildet sind, vorstellbar.

Folglich lässt sich für eine Filterelement 10, wie beispielsweise in den Figuren 2a-2d dargestellt, die in den erfindungsgemäßen Gasgenerator 100 eingebaut ist, feststellen, dass durch einen derartigen schicht- bzw. lagenartigen Aufbau ganz speziell auf die jeweiligen Bedürfnisse hinsichtlich Filterung in einem Gasgenerator 100 eingegangen werden kann, indem insbesondere durch diesen Aufbau entsprechend schichtweise angepasste unterschiedliche Bereiche von Dichte und/oder Durchlassrate für Gase und Partikel dargestellt werden können, um für die gesamte Filtereinheit 10 ein optimiertes angepasstes Filterverhalten und/oder Verzögerungsverhalten bezüglich Abbrandzeitpunkte für verschiedene Treibstoffkörper 18, 24 in dem Gasgenerator zu bewirken. Vorteilhaft kann dadurch die bereits weiter oben beschriebene stufenartige Abbrandcharakteristik bzw. die "S-Slope Abbrandcharakteristik" der verschiedenen Treibstoffkörper in den verschiedenen Treibstoffbetten erreicht werden.

## Patentansprüche

1. Gasgenerator (100) für ein Fahrzeugsicherheitssystem, mit einem äußeren Gehäuse (34), einer Anzündereinheit (38) mit einem Anzünder (42), einer der Anzündereinheit (38) axial nachgelagerten Brennkammer (14) mit Treibstoffkörpern (18, 24), wobei das Gehäuse (34) als ein Druckgasbehälter (35) ausgebildet ist und im Ruhezustand des Gasgenerators (100) die Brennkammer (14) mit Druckgas befüllt ist und das Gehäuse (34) an dem axialen Ende, das sich gegenüber dem durch die Anzündereinheit (38) verschlossen Endes des Gehäuses (34) befindet, eine konisch nach radial innen zulaufende Kontur aufweist, welche in einer Ausströmöffnung (36) endet, die vor einer Aktivierung des Gasgenerators (100), mittels eines zweiten Berstelements (60) gasdicht verschlossen ist ,
**dadurch gekennzeichnet, dass**
innerhalb der Brennkammer (14) zumindest eine Filtereinheit (10) angeordnet ist, die die Brennkammer (14) entlang einer Längsachse (La) des Gasgenerators (100) in einen ersten Brennkammerabschnitt (15) mit einer ersten Anzahl von ersten Treibstoffkörpern (18) und zumindest einen weiteren Brennkammerabschnitt (20) mit einer weiteren Anzahl von weiteren Treibstoffkörpern (24) aufteilt und die zumindest eine Filtereinheit (10) im Ruhezustand und/oder im Aktivierungszustand des Gasgenerators (100) verschiebbar entlang der Längsachse (La) des Gasgenerators (100) zwischen einem durch die Anzahl der ersten Treibstoffkörper (18) gebildeten ersten Treibstoffbett (16) und einem durch die Anzahl der weiteren Treibstoffkörper (24) gebildeten zweiten Treibstoffbett (22) gelagert ist, wobei nach einer Aktivierung des Gasgenerators (100) die zumindest eine Filtereinheit (10) als ein Verzögerungsglied wirkt, derart, dass nach einer Entzündung einer ersten Anzahl der ersten Treibstoffkörper (18) das zweite Berstelement (60) derart schnell geöffnet wird, dass zum Zeitpunkt dessen Öffnung noch keine Abbrandpartikel der ersten Treibstoffkörper (18) in das zweite Treibstoffbett (22) gelangt sind.

2. Gasgenerator (100) nach Anspruch 1,
**dadurch gekennzeichnet, dass**
die zumindest eine Filtereinheit (10) gasdurchlässig und/oder partikeldurchlässig ausgebildet ist, wobei zumindest einige der ersten Treibstoffkörper (18) an einer anzünderseitigen Stirnseite (11) der zumindest einen Filtereinheit (10) und zumindest einige der weiteren Treibstoffkörper (24) an einer der anzünderseitigen Stirnseite (11) gegenüberliegenden Rückseite (12) der zumindest einen Filtereinheit (10) angeordnet sind, und wobei vorzugsweise die ersten und die weiteren Treibstoffkörper (18, 24) voneinander unterschiedliche Abbrandraten und/oder Dimensionen und/oder chemische Zusammensetzungen aufweisen.

3. Gasgenerator (100) nach Anspruch 1 oder 2,
**dadurch gekennzeichnet, dass**
innerhalb der Brennkammer (14) zumindest zwei, vorzugsweise drei, insbesondere vier oder mehr Filtereinheiten (10) angeordnet sind, die die Brennkammer (14) entlang der Längsachse (La) des Gasgenerators (100) in zumindest drei, vorzugsweise vier, insbesondere fünf oder mehr Brennkammerabschnitte (15, 20) mit einer jeweiligen Anzahl von jeweiligen Treibstoffkörpern (18, 24) aufteilen.

4. Gasgenerator (100) nach zumindest einem der voranstehenden Ansprüche, **dadurch gekennzeichnet, dass**
die zumindest eine Filtereinheit (10) sich im Wesentlichen senkrecht zu der Längsachse (La) des Gasgenerators (100) und im Wesentlichen über die gesamte radiale Querschnittsfläche des Gehäuses (34) des Gasgenerators (100) erstreckt, insbesondere derart, dass zwei benachbarte Brennkammerabschnitte (15, 20) durch die zumindest eine Filtereinheit (10) axial voneinander beabstandet sind, und/oder wobei die zumindest eine Filtereinheit (10) im Wesentlichen inkompressibel ausgebildet ist.

5. Gasgenerator (100) nach zumindest einem der voranstehenden Ansprüche, **dadurch gekennzeichnet, dass**
die zumindest eine Filtereinheit (10) als eine Baugruppe ausgebildet ist, welche mehrere einzelne Filterelemente (4, 6, 8), insbesondere ein erstes Filterelement (4), ein zweites Filterelement (6) und ein drittes Filterelement (8), umfasst, die vorzugsweise entlang der Längsachse (La) des Gasgenerators (100) aneinander angrenzen.

6. Gasgenerator (100) nach zumindest einem der voranstehenden Ansprüche, insbesondere nach Anspruch 5,
**dadurch gekennzeichnet, dass**
die zumindest eine Filtereinheit (10) Bereiche unterschiedlicher Dichte, beziehungsweise die mehreren einzelnen Filterelemente (4, 6, 8) jeweils unterschiedliche Dichte und/oder Durchlassrate für Gase und Partikel aufweist/aufweisen, wobei vorzugsweise die mehreren einzelnen Filterelemente (4, 6, 8) fest miteinander verbunden sind.

7. Gasgenerator (100) nach Anspruch 6,
**dadurch gekennzeichnet, dass**
die zumindest eine Filtereinheit (10) eine der folgenden Anordnungen vom Filterelementen (4, 6, 8) aufweist:
a) Streckmetallblech, Drahtgewebe, Drahtgeflecht;
b) Streckmetallblech, Streckmetallblech, Drahtgeflecht;
c) Drahtgewebe, Drahtgewebe, Drahtgeflecht;
d) Lochblech, Streckmetallblech, Maschengestrick;
e) Lochblech, Drahtgewebe, Drahtgeflecht.

8. Gasgenerator (100) nach zumindest einem der voranstehenden Ansprüche, **dadurch gekennzeichnet, dass**
zusätzlich zu den ersten und den weiteren Treibstoffkörpern (18, 24), die maßgeblich für eine Gaserzeugung des Gasgenerators (100) sind, eine Boosterladung (44) im Gasgenerator (100), insbesondere außerhalb der Brennkammer (14), vorzugsweise in der Anzündereinheit (38), aufgenommen ist.

9. Gassackmodul mit einem Gasgenerator (100), einem von dem Gasgenerator (100) aufblasbaren Gassack und einer Befestigungseinrichtung zur Anbringung des Gassackmoduls an einem Fahrzeug,
**dadurch gekennzeichnet, dass**
der Gasgenerator (100) nach zumindest einem der Ansprüche 1 bis 8 ausgebildet ist.

10. Fahrzeugsicherheitssystem zum Schutz einer Person, beispielsweise eines Fahrzeuginsassen oder Passanten, mit einem Gasgenerator (100), einem von diesem aufblasbaren Gassack, als Teil eines Gassackmoduls, und einer elektronischen Steuereinheit, mittels der der Gasgenerator (100) bei Vorliegen einer Auslösesituation aktivierbar ist,
**dadurch gekennzeichnet, dass**
der Gasgenerator (100) nach zumindest einem der Ansprüche 1 bis 8 ausgebildet ist.

11. Verfahren zum Betreiben eines Gasgenerators (100), nach einem der Ansprüche 1 bis 8, mit den folgenden Schritten:
a) Aktivieren einer Anzündereinheit (38) zur Erzeugung von Anzündschwaden und eines Druckanstiegs innerhalb einer Anzündkammer (46);
b) Einleiten der Anzündschwaden in einen ersten Brennkammerabschnitt (15) hin zu einer Anzahl von ersten Treibstoffkörpern (18), wobei ein die Anzündkammer (46) verschließendes erstes Berstelement (52), welches ein Verschlusselement hin zu einem Druckgasbehälter (35) darstellt, geöffnet wird;
c) Anzünden zumindest eines Teils der Anzahl von ersten Treibstoffkörpern (18) und dadurch Erzeugen von Abbrandgas und/oder Abbrandpartikel;
d) Lenkung des Abbrandgases und/oder der Abbrandpartikel heraus aus dem ersten Brennkammerabschnitt (15), durch eine Filtereinheit (10) hindurch, in einen weiteren Brennkammerabschnitt (20) mit einer Anzahl von weiteren Treibstoffkörpern (24), insbesondere entlang einer Hauptströmungsrichtung (H), vorzugsweise entlang einer Längsachse (La) des Gasgenerators (100), wobei die Filtereinheit (10) in axialer Richtung verschoben wird;
e) Anzünden zumindest eines Teils der Anzahl von weiteren Treibstoffkörpern (24) und dadurch Erzeugen von weiterem Abbrandgas zeitlich verzögert zum Schritt c);
f) Öffnen eines gasgeneratorendseitigen zweiten Berstelements (60) und Ausleiten des Abbrandgases des ersten und weiteren Brennkammerabschnitts (15, 20), vorzugsweise über einen Diffusor (64), in die Umgebung des Gasgenerators (100), insbesondere in einen aufzublasenden Gassack.

## Claims

1. A gas generator (100)for a vehicle safety system, comprising an exterior housing (34), an igniter unit (38) having an igniter (42), a combustion chamber (14) having fuel bodies (18, 24) and being arranged axially downstream of the igniter unit (38), wherein the housing (34) of the gas generator (100) is in the form of a compressed gas container (35) and wherein, in the idle state of the gas generator (100), the combustion chamber (14) is filled with compressed gas, and wherein the housing (34) comprises a conical, radially inwardly extending contour at the one of its axial ends, that is located opposite to the end of the housing (34) closed by the ignitor unit (38), wherein the contour ends in a discharge port opening (36) being closed in a gas tight manner via a second burst element (60) prior to the activation of the gas Generator (100) **characterized in that** at least one filter unit (10) is arranged within the combustion chamber (14), which filter unit (10) divides the combustion chamber (14) along a longitudinal axis (La) of the gas generator (100) into a first combustion chamber portion (15) having a first number of first fuel bodies (18) and at least one additional combustion chamber portion (20) having an additional number of additional fuel bodies (24), wherein the at least one filter unit (10) is supported, in the idle state and/or in the activation state of the gas generator (100), to be movable along the longitudinal axis (La) of the gas generator (100) between a first fuel bed (16) formed by the number of the first fuel bodies (18) and a second fuel bed (22) formed by the number of the additional fuel bodies (24), wherein after activation of the gas generator (100) the at least one filter unit (10) acts as a delaying member, such that after ignition of a first number of the first fuel bodies (18), the second burst element (60) is opened so quickly, that at the time of its opening none of the combustion products of the first fuel bodies (18) have reached the second fuel bed (22).

2. The gas generator (100) according to claim 1,
**characterized in that**
the at least one filter unit (10) is configured to be permeable to gas and/or permeable to particles, wherein at least several of the first fuel bodies (18) are arranged on an igniter-side end face (11) of the at least one filter unit (10) and at least several of the additional fuel bodies (24) are arranged on a rear side (12) of the at least one filter unit (10) opposed to the igniter-side end face (11), and wherein preferably the first and the additional fuel bodies (18, 24) have burning rates and/or dimensions and/or chemical compositions that are different from each other.

3. The gas generator (100) according to claim 1 or 2,
**characterized in that**
inside the combustion chamber (14) at least two, preferably three, especially four or more filter units (10) are arranged which divide the combustion chamber (14) along the longitudinal axis (La) of the gas generator (100) into at least three, preferably four, especially five or more combustion chamber portions (15, 20) having a particular number of particular fuel bodies (18, 24).

4. The gas generator (100) according to at least one of the preceding claims, **characterized in that**
the at least one filter unit (10) extends substantially perpendicularly to the longitudinal axis (La) of the gas generator (100) and substantially over the entire radial cross-sectional area of the housing (34) of the gas generator (100), especially such that two adjacent combustion chamber portions (15, 20) are axially spaced apart from each other by the at least one filter unit (10), and/or wherein the at least one filter unit (10) is formed to be substantially uncompressible.

5. The gas generator (100) according to at least one of the preceding claims, **characterized in that**
the at least one filter unit (10) is configured as a subassembly comprising plural individual filter elements (4, 6, 8), especially a first filter element (4), a second filter element (6) and a third filter element (8), which preferably abut against each other along the longitudinal axis (La) of the gas generator (100).

6. The gas generator (100) according to at least one of the preceding claims, especially according to claim 5,
**characterized in that**
the at least one filter unit (10) has areas of different density and, resp., the plural individual filter elements (4, 6, 8) have different densities and/or flow rates for gases and particles, wherein preferably the plural individual filter elements (4, 6, 8) are tightly connected to each other.

7. The gas generator (100) according to claim 6,
**characterized in that**
the at least one filter unit (10) includes one of the following arrangements of filter elements (4, 6, 8):
a) expanded sheet metal, wire cloth, wire mesh;
b) expanded sheet metal, expanded sheet metal, wire mesh;
c) wire cloth, wire cloth, wire mesh;
d) perforated sheet, expanded sheet metal, knitted wire;
e) perforated sheet, wire cloth, wire mesh.

8. The gas generator (100) according to at least one of the preceding claims, **characterized in that**,
in addition to the first and the additional fuel bodies (18, 24) which are important to gas generation by the gas generator (100), a booster charge (44) is accommodated in the gas generator (100), especially outside the combustion chamber (14), preferably in the igniter unit (28).

9. An airbag module comprising a gas generator (100), an airbag inflatable by the gas generator (100) and a fastening means for mounting the airbag module on a vehicle,
**characterized in that**
the gas generator (100) is configured according to at least one of the claims 1 to 9

10. A vehicle safety systemfor the protection of a person such as a vehicle occupant or a pedestrian, comprising a gas generator (100), an airbag inflatable by the same as part of an airbag module, and an electronic control unit by means of which the gas generator (100) can be activated, if a trigger situation is given,
**characterized in that**
the gas generator (100) is configured according to at least one of the claims 1 to 9.

11. A method for operating a gas generator (100), especially according to any one of the claims 1 to 90, comprising the following steps of:
a) activating an igniter unit (38) for generating ignition fumes and an increase in pressure inside an ignition chamber (46);
b) introducing the ignition fumes into a first combustion chamber portion (15) toward a number of first fuel bodies (18) wherein a first burst element (52) which closes the ignition chamber (46) and which constitutes a closure element toward a compressed gas container (35) is opened;
c) igniting at least part of the number of first fuel bodies (18) and thus generating burning gas and/or burning particles;
d) directing the burning gas and/or the burning particles out of the first combustion chamber portion (15), through a filter unit (10), into an additional combustion chamber portion (20) having a number of additional fuel bodies (24), especially along a main flow direction (H), preferably along a longitudinal axis (La) of the gas generator (100);
e) igniting at least part of the number of additional fuel bodies (24) and thereby generating additional burning gas delayed in time compared to step c);
f) opening a second burst element (60) on the end side of the gas generator and discharging the burning gas of the first and additional combustion chamber portions (15, 20), preferably via a diffusor (64), into the environment of the gas generator (100), especially into an airbag to be inflated.

## Revendications

1. Générateur de gaz (100) pour un système de sécurité de véhicule, comprenant un boîtier extérieur (34), une unité d'allumage (38) avec un allumeur (42), une chambre de combustion (14) avec des blocs de propergol (18, 24) placée axialement en aval de l'unité d'allumage (38), pour lequel le boîtier (34) est réalisé sous la forme d'un réservoir de gaz comprimé (35) et, à l'état de repos du générateur de gaz (100), la chambre de combustion (14) est remplie de gaz comprimé et le boîtier (34) présente, à l'extrémité axiale, qui se trouve en face de l'extrémité du boîtier (34) fermée par l'unité d'allumage (38), un contour conique se terminant radialement vers l'intérieur, qui se termine par une ouverture de sortie (36), laquelle est fermée de manière étanche au gaz avant une activation du générateur de gaz (100), au moyen d'un deuxième élément de rupture (60),
**caractérisé en ce que**
au moins une unité de filtration (10) est disposée à l'intérieur de la chambre de combustion (14), laquelle divise la chambre de combustion (14) le long d'un axe longitudinal (La) du générateur de gaz (100) en une première section de chambre de combustion (15) avec une première pluralité de premiers blocs de propergol (18) et au moins une autre section de chambre de combustion (20) avec une autre pluralité d'autres blocs de propergol (24), et l'au moins une unité de filtrage (10) peut, à l'état de repos et/ou à l'état d'activation du générateur de gaz (100), être déplacée le long de l'axe longitudinal (La) du générateur de gaz (100) entre un premier lit de propergol (16) formé par la pluralité des premiers blocs de propergol (18) et un lit de propergol (20) formé par la pluralité des autres blocs de propergol (20), pour lequel, après une activation du générateur de gaz (100), l'au moins une unité de filtration (10) agit comme un élément retardant de telle sorte qu'après une inflammation d'une première pluralité des premiers blocs de propergol (18), le deuxième élément de rupture (60) est ouvert si rapidement qu'au moment de son ouverture, aucune particule de combustion des premiers blocs de propergol (18) n'est encore parvenue dans le deuxième lit de propergol (22).

2. Générateur de gaz (100) selon la revendication 1,
**caractérisé en ce que**
l'au moins une unité de filtration (10) est réalisée perméable aux gaz et/ou perméable aux particules, pour lequel au moins quelques-uns des premiers bloc de propergol (18) sont disposés sur une face frontale (11) côté allumage de l'au moins une unité de filtration (10) et au moins quelques-uns des autres blocs de propergol (24) sont disposés sur une face arrière (12), opposée à la face frontale (11) côté allumage, de l'au moins une unité de filtration (10), et pour lequel de préférence les premiers et les autres blocs de propergol (18, 24) présentant des vitesses de combustion et/ou des dimensions et/ou des compositions chimiques différents les uns des autres.

3. Générateur de gaz (100) selon la revendication 1 ou 2,
**caractérisé en ce que**
à l'intérieur de la chambre de combustion (14) sont disposées au moins deux, de préférence trois, en particulier quatre ou plus unités de filtration (10) qui divisent la chambre de combustion (14) le long de l'axe longitudinal (La) du générateur de gaz (100) en au moins trois, de préférence quatre, en particulier cinq ou plus sections de chambre de combustion (15, 20) avec une pluralité respective de blocs de propergol respectifs (18, 24).

4. Générateur de gaz (100) selon au moins l'une des revendications précédentes,
**caractérisé en ce que**
l'au moins une unité de filtration (10) s'étend sensiblement perpendiculairement à l'axe longitudinal (La) du générateur de gaz (100) et sensiblement sur toute la surface radiale de la section transversale du boîtier (34) du générateur de gaz (100), en particulier de telle sorte que deux sections de chambre de combustion (15, 20) voisines sont espacées axialement l'une de l'autre par l'au moins une unité de filtration (10), et/ou pour lequel l'au moins une unité de filtration (10) est conçue de manière sensiblement incompressible.

5. Générateur de gaz (100) selon au moins l'une des revendications précédentes,
**caractérisé en ce que**
l'au moins une unité de filtration (10) est réalisée sous la forme d'un module qui comprend plusieurs éléments de filtration individuels (4, 6, 8), en particulier un premier élément de filtration (4), un deuxième élément de filtration (6) et un troisième élément de filtration (8), qui sont de préférence adjacents les uns aux autres le long de l'axe longitudinal (La) du générateur de gaz (100).

6. Générateur de gaz (100) selon au moins l'une des revendications précédentes, notamment selon la revendication 5,
**caractérisé en ce que**
l'au moins une unité de filtration (10) présente des zones de densité différente, pour lequel respectivement les plusieurs éléments de filtration individuels (4, 6, 8) présentent respectivement des densités et/ou des taux de passage différents pour les gaz et les particules, pour lequel de préférence les plusieurs éléments de filtration individuels (4, 6, 8) sont reliés solidement entre eux.

7. Générateur de gaz (100) selon la revendication 6,
**caractérisé en ce que**
L'au moins une unité de filtration (10) présente l'un des agencements suivants d'éléments de filtration (4, 6, 8) :
a) tôle de métal déployé, toile métallique, filet métallique ;
b) tôle de métal déployé, tôle de métal déployé, filet métallique ;
c) tissu métallique, tissu métallique, filet métallique ;
d) tôle perforée, tôle de métal déployé, tricot métallique ;
e) tôle perforée, toile métallique, filet métallique.

8. Générateur de gaz (100) selon au moins l'une des revendications précédentes,
**caractérisé en ce que**
en plus des premiers et des autres blocs de propergol (18, 24), qui sont déterminants pour une production de gaz du générateur de gaz (100), une charge d'appoint (44) est logée dans le générateur de gaz (100), en particulier à l'extérieur de la chambre de combustion (14), de préférence dans l'unité d'allumage (38).

9. Module airbag comprenant un générateur de gaz (100), un coussin gonflable pouvant être gonflé par le générateur de gaz (100) et un dispositif de fixation pour monter le module airbag sur un véhicule,
**caractérisé en ce que**
le générateur de gaz (100) est réalisé selon au moins l'une des revendications 1 à 8.

10. Système de sécurité de véhicule pour la protection d'une personne, par exemple un passager du véhicule ou un passant, avec un générateur de gaz (100), un coussin gonflable par celui-ci, en tant que partie d'un module airbag, et une unité de commande électronique, au moyen de laquelle le générateur de gaz (100) peut être activé en présence d'une situation de déclenchement,
**caractérisé en ce que**
le générateur de gaz (100) est conçu selon au moins l'une des revendications 1 à 8.

11. Procédé de fonctionnement d'un générateur de gaz (100), selon l'une quelconque des revendications 1 à 8, comprenant les étapes suivantes :
a) activer une unité d'allumage (38) pour générer des gaz d'allumage et une montée en pression à l'intérieur d'une chambre d'allumage (46) ;
b) introduire les gaz d'allumage dans une première section de chambre de combustion (15) vers un certain nombre de premiers blocs de propergol (18), en ouvrant un premier élément de rupture (52) qui ferme la chambre d'allumage (46) et qui constitue un élément de fermeture vers un réservoir de gaz comprimé (35) ;
c) allumer au moins une partie de la pluralité de premiers blocs de propergol (18), produisant ainsi du gaz de combustion et/ou des particules de combustion ;
d) diriger le gaz de combustion et/ou les particules de combustion hors de la première section de chambre de combustion (15), à travers une unité de filtration (10), dans une autre section de chambre de combustion (20) avec une pluralité d'autres blocs de propergol (24), en particulier le long d'une direction d'écoulement principale (H), de préférence le long d'un axe longitudinal (La) du générateur de gaz (100), pour lequel l'unité de filtration (10) sera déplacée dans la direction axiale ;
e) allumer au moins une partie de la pluralité d'autres blocs de propergol (24), générant ainsi d'autres gaz de combustion de manière différée par rapport à l'étape c) ;
f) ouvrir un deuxième élément de rupture (60) côté extrémité du générateur de gaz et évacuation du gaz de combustion de la première et de l'autre section de chambre de combustion (15, 20), de préférence par un diffuseur (64), dans l'environnement du générateur de gaz (100), en particulier dans un coussin gonflable à gonfler.
